# FASCICULE DE BREVET EUROPEEN

(11) **EP 2 093 871 B1**
(45) Date de publication et mention de la délivrance du brevet: **26.10.2011**
(21) Numéro de dépôt: 09152676.4
(22) Date de dépôt: 12.02.2009
(51) Int. Cl.: H02M 1/32, H02H 7/122, H02M 5/458

(54) **Dispositif de protection d'un variateur de vitesse contre les surintensités**
Überstromschutzvorrichtung für einen Geschwindigkeitsregler
Device for protecting a speed controller against overcurrent

(30) Priorité: 21.02.2008 FR 0851101
(43) Date de publication de la demande: 26.08.2009
(73) Titulaire: Schneider Toshiba Inverter Europe SAS, 27120 Pacy sur Eure (FR)
(72) Inventeur: Baudesson, Philippe, 27220 La Boissiere (FR); Boulharts, Hocine, 78510 Triel Sur Seine (FR)
(74) Mandataire: Bié, Nicolas

(56) Documents cités:
- EP-A- 1 835 609
- EP-A- 1 862 348
- FR-A- 2 538 187
- JP-A- 63 268 431
- US-A1- 2004 246 641
- US-A1- 2006 238 940
- US-A1- 2007 147 099
- US-A1- 2007 262 806

## Description

La présente invention se rapporte à un variateur de vitesse doté d'un dispositif de protection contre les surintensités générées par des surtensions ou des sous-tensions sur le réseau électrique d'alimentation. Le document EP1862348A1 divulgue and variateur comportant les caratéristiques du préambule de la revendication 1.

De manière connue, un variateur de vitesse est connecté au réseau électrique d'alimentation et destiné à commander une charge électrique. Il comporte en entrée un module redresseur de tension qui transforme une tension alternative fournie par le réseau électrique en une tension continue et qui alimente en aval un bus de puissance doté d'une ligne positive et d'une ligne négative. Un condensateur de filtrage, appelé communément condensateur de bus, est monté entre une borne positive et une borne négative du bus de puissance. En sortie, le variateur comporte un module onduleur alimenté par le bus de puissance, permettant de générer, à partir de la tension continue, une tension alternative qui peut être d'amplitude et de fréquence variables en utilisant des interrupteurs électroniques par exemple de type transistor IGBT commandés par Modulation à Largeur d'Impulsions (MLI ou PWM).

Le réseau électrique d'alimentation peut subir différents types de perturbations telles que des surtensions ou des sous-tensions. Les perturbations peuvent être de forte amplitude et de courte durée, donc faiblement énergisantes ou de faible amplitude et de longue durée, donc fortement énergisantes. Si les perturbations sont fortement énergisantes, certains composants du variateur comme les diodes du module redresseur, le condensateur de bus ou les transistors du module onduleur peuvent se détériorer.

Le but de l'invention est donc de proposer un variateur de vitesse permettant d'absorber sans dommage les perturbations du réseau électrique.

Ce but est atteint par un variateur de vitesse comportant :
- en entrée, un module redresseur pour générer sur un bus de puissance une tension continue à partir d'une tension alternative disponible sur un réseau électrique d'alimentation,
- un condensateur de bus connecté entre une ligne positive et une ligne négative du bus de puissance, et
- un module onduleur alimenté par le bus de puissance et commandé pour délivrer une tension alternative à une charge électrique,
- un dispositif de protection du variateur contre les surintensités liées à des variations de tension sur le réseau électrique d'alimentation,
   **caractérisé en ce que** dispositif de protéction comporte:
- un premier interrupteur électronique placé sur le bus de puissance en série entre le module redresseur et le condensateur de bus,
- une première résistance montée en parallèle du premier interrupteur électronique,
- un ensemble comprenant un second interrupteur électronique et une seconde résistance montés en série, ledit ensemble étant monté en parallèle du premier interrupteur électronique et de la première résistance,
- des moyens de commande du premier interrupteur électronique et du second interrupteur électronique.

Selon une particularité, le dispositif de protection est monté sur la ligne positive du bus de puissance.

Préférentiellement, le premier interrupteur électronique est un transistor de type JFET, normalement fermé réalisé dans un matériau à grande énergie de bande interdite tel que par exemple le carbure de silicium.

Selon une particularité, les moyens de commande du transistor JFET sont connectés entre la ligne positive et la ligne négative du bus de puissance. Ces moyens de commande comprennent par exemple un circuit pompe de charge apte à appliquer une tension de commande au transistor JFET.

Préférentiellement, le second interrupteur électronique est de type normalement ouvert. Les moyens de commande du second interrupteur électronique comprennent un circuit pompe de charge apte à appliquer une tension de commande au second interrupteur électronique.

Selon l'invention, les moyens de commande comportent des moyens de mémorisation mémorisant une valeur seuil pour la tension mesurée aux bornes du transistor JFET au-dessus de laquelle le transistor JFET est commandé à l'ouverture par les moyens de commande. Les moyens de mémorisation mémorisent également une durée prédéterminée au bout de laquelle si la tension mesurée aux bornes du transistor JFET reste supérieure à la valeur seuil, le second interrupteur électronique est commandé à la fermeture. Les moyens de mémorisation peuvent mémoriser une valeur seuil pour la tension mesurée entre la ligne positive et la ligne négative du bus de puissance au-dessus de laquelle le second interrupteur électronique est commandé à la fermeture.

De préférence, le variateur comporte en outre un dispositif pour protéger le module redresseur contre les surtensions. Ce dispositif pour protéger le module redresseur contre les surtensions comporte par exemple un transistor de limitation de type JFET normalement fermé et une diode Zener connectés tous deux en parallèle entre la ligne positive et la ligne négative du bus de puissance. En variante, le dispositif pour protéger le module redresseur contre les surtensions comporte une varistance de type GMOV connectée entre la ligne positive et la ligne négative du bus de puissance.

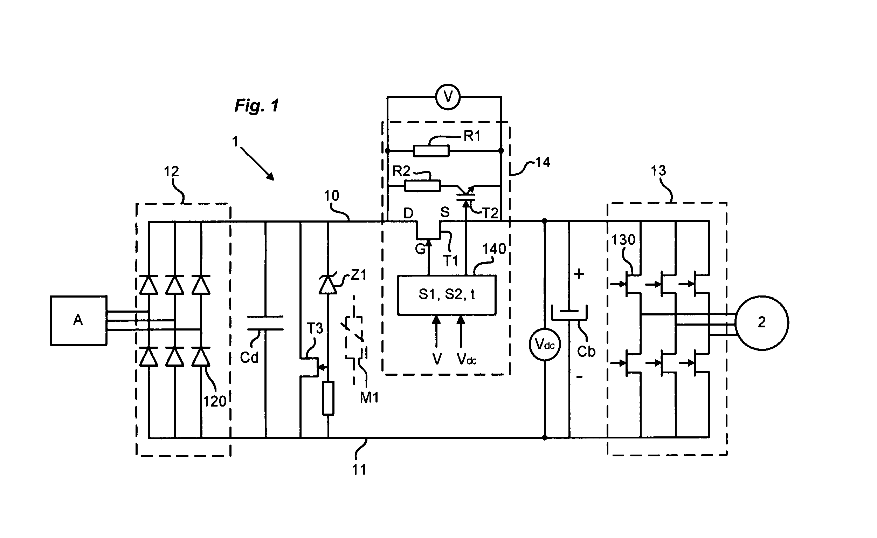

D'autres caractéristiques et avantages vont apparaître dans la description détaillée qui suit en se référant à un mode de réalisation donné à titre d'exemple et représenté par les dessins annexés sur lesquels la figure 1 représente de manière simplifiée un variateur de vitesse doté du dispositif de protection de l'invention.

En référence à la figure 1, un variateur de vitesse 1 comporte une source de tension continue qui alimente un bus de puissance avec une tension continue Vdc (par exemple de l'ordre de 200 à 800Vcc ou plus, suivant les conditions d'utilisation). Le bus de puissance est composé d'une ligne positive 10 et d'une ligne négative 11. Un condensateur de bus Cb est habituellement utilisé pour maintenir constante la tension continue Vdc du bus de puissance. Ce condensateur de bus Cb est connecté entre une borne positive et une borne négative du bus de puissance et est généralement de type électrolytique.

Sur la figure 1, le variateur 1 comporte en entrée un module redresseur 12 qui est destiné à redresser une tension triphasée alternative provenant d'un réseau d'alimentation extérieur A (par exemple un réseau électrique triphasé 380Vac). Ce module redresseur 12 utilise avantageusement des diodes 120 qui sont plus économiques et plus fiables que des thyristors.

Le variateur de vitesse 1 comporte ensuite en sortie un module onduleur 13 permettant, à partir du bus de puissance, de commander une charge électrique 2 avec une tension alternative qui peut être d'amplitude et de fréquence variables. Le module onduleur 13 utilise pour cela une commande par Modulation à Largeur d'Impulsions (MLI ou PWM) pour commander des interrupteurs électroniques de puissance 130 montés sur chaque phase. Ces interrupteurs sont des transistors de puissance, par exemple de type IGBT, commandés par un module de commande, non représenté sur la figure. Sur la figure 1, le module onduleur 13 comporte trois bras pour délivrer une tension alternative triphasée à la charge électrique 2, chaque bras étant doté de deux transistors de puissance en série entre une borne positive et une borne négative du bus de puissance, soit un total de six transistors de puissance.

L'invention consiste à placer un dispositif de protection 14 dans le variateur pour le protéger contre les surintensités liées à des variations de tension sur le réseau électrique d'alimentation A.

Ces surintensités peuvent être générées par deux phénomènes distincts :
- lors d'une surtension, il se produit un fort appel de courant dans le condensateur de bus Cb ce qui peut causer la détérioration du pont de diodes du module redresseur 12 et une forte surtension sur le bus de puissance ce qui peut causer la détérioration du module onduleur 13 et du condensateur de bus Cb,
- lors d'un retour à la normale, après une sous-tension, il se produit également un fort appel de courant dans le condensateur de bus Cb ce qui peut causer la détérioration du pont de diodes du module redresseur 12.

Il est donc nécessaire de limiter le courant d'appel dans le module redresseur 12 pour le préserver lors d'une surtension ou après une sous-tension apparaissant sur le réseau A.

Pour cela le dispositif 14 de l'invention comporte notamment un premier interrupteur électronique par exemple de type JFET, MOSFET ou IGBT normalement ouvert ou normalement fermé.

Préférentiellement, le premier interrupteur électronique est réalisé dans un matériau à grande énergie de bande interdite (appelé également "matériau à grand gap" ou "wide-band gap material"), c'est-à-dire présentant une faible résistance à l'état passant R_{dson} et capable de supporter des tensions importantes (supérieures à 1000 V), comme par exemple du carbure de silicium ou du nitrure de gallium (GaN).

Ce premier interrupteur électronique est préférentiellement de type JFET. Un transistor JFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si la tension V_{GS} entre la Grille et la Source est proche de zéro. Cela signifie que le chemin Drain-Source est passant ou conducteur en l'absence de tension de commande V_{GS}. Inversement un transistor JFET est dit du type normalement ouvert (ou "normally OFF") si le chemin Drain-Source n'est pas conducteur en l'absence de tension V_{GS} entre Grille et Source.

De plus, il s'avère qu'un transistor JFET normalement fermé offre de meilleures performances que d'autres types d'interrupteurs électroniques de puissance commandés en tension, tels que des MOSFET, des IGBT ou même des interrupteurs de type JFET normalement ouvert. En effet, un tel interrupteur présente notamment les avantages d'être plus rapide à commuter, de générer moins de pertes en conduction à l'état passant (faible résistance R_{DSon} à l'état passant), d'avoir une meilleure tenue en température et d'avoir une taille plus petite.

Le dispositif de protection 14 de l'invention comporte donc préférentiellement un transistor JFET T1, normalement fermé, réalisé dans un matériau à grande énergie de bande interdite comme le carbure de silicium ou le nitrure de gallium. Le transistor T1 est monté sur la ligne positive 10 du bus de puissance entre le module redresseur 12 et le condensateur de bus Cb. Le dispositif 14 comporte également une première résistance R1 montée en parallèle du transistor T1 et un ensemble constitué d'une seconde résistance R2 et d'un second interrupteur électronique en série, cet ensemble étant monté en parallèle du transistor T1 et de la première résistance R1. Le second interrupteur électronique est par exemple un transistor T2 de type IGBT normalement ouvert.

La première résistance a une valeur forte, de l'ordre de plusieurs dizaines d'Ohms, par exemple de 70 Ohms (pour un variateur de 4kW, de 100 Ohms à 10 Ohms), tandis que la seconde résistance a une valeur faible, de l'ordre de quelques Ohms, par exemple 3 Ohms (pour un variateur de 4kW, de 5 Ohms à 0.5 Ohm).

Le dispositif de l'invention comporte en outre des moyens de commande 140 du transistor T1 et du transistor T2. Ces moyens de commande 140 comprennent notamment des moyens de traitement pour décider de la commutation des transistors T1 et T2, des moyens de mémorisation de différentes valeurs seuils, une alimentation destinée à la commande du transistor T1 et une alimentation destinée à la commande du transistor T2. Les alimentations employées sont par exemple des circuits pompe de charge ("charge pump circuit" en anglais) qui comprennent par exemple un condensateur se chargeant à partir du bus de puissance lors de la pré-charge du circuit et une diode Zener montée en parallèle du condensateur. Le circuit pompe de charge destiné à la commande du transistor T2 électronique prend sa source sur le Drain du transistor T1 tandis que le circuit pompe de charge du transistor T1 prend sa source sur la Source du transistor T1. Il est également possible d'utiliser des alimentations externes isolées pour commander les transistors T1 et T2 mais dans ce cas les moyens de commande 140 ne sont plus alimentés directement à partir du bus de puissance et le circuit n'est donc plus autonome. Dans ce cas, on pourrait envisager d'utiliser un transistor T1 de type normalement ouvert et de disposer le dispositif de protection 14 de l'invention sur la ligne négative 11 du bus de puissance, entre le module redresseur 12 et le condensateur de bus Cb.

Le variateur 1 comporte en outre un condensateur de découplage Cd connecté entre la ligne positive 10 et la ligne négative 11 du bus de puissance, en aval du module redresseur 12 et en amont du dispositif de protection 14. Ce condensateur de découplage Cd sert à écrêter, sur une durée limitée, les fortes surtensions apparaissant sur le réseau électrique d'alimentation A.

Selon que le variateur 1 est en pré-charge au démarrage, subit une surtension réseau ou une sous-tension, le dispositif de protection 14 du variateur 1 fonctionne de la manière suivante :

### - Au démarrage :

Le transistor T1 est initialement passant. Sa résistance à l'état passant (Rdson) est très faible. La tension V mesurée aux bornes du transistor T1 est donc également très faible. Le transistor T2 est initialement ouvert.

Le transistor T1 passe en limitation dés que le courant qui le traverse devient supérieur à son courant de limitation. Le courant de limitation est suffisant pour charger les deux condensateurs des circuits pompe de charge des transistors T1 et T2. Une fois que le condensateur du circuit pompe de charge du transistor T1 est chargé, les moyens de commande 140 appliquent une tension pour commander l'ouverture de T1 afin de charger le condensateur de bus Cb via la première résistance R1. La première résistance R1 a une valeur forte ce qui permet de charger le condensateur de bus Cb lentement et de remplir la fonction d'un circuit de pré-charge. Si la tension Vdc aux bornes du condensateur de bus est supérieure à une première valeur seuil S1 mémorisée, par exemple 250 Volts, il est possible de commander le transistor T2 à la fermeture pour accélérer la charge du condensateur de bus Cb, la seconde résistance R2 en série avec T2 présentant une valeur plus faible que celle de la première résistance R1. Cette dernière fonctionnalité est optionnelle dans le dispositif de l'invention. Elle présente un intérêt dans le cas où le condensateur de bus Cb dispose d'une capacité importante.

Lorsque la tension V mesurée aux bornes du transistor T1 est à nouveau nulle, cela signifie que le démarrage est terminé. En effet si la tension V mesurée aux bornes du transistor T1 est nulle, cela signifie que plus aucun courant ne traverse la première résistance R1 ou la seconde résistance R2 et donc que le condensateur de bus Cb est complètement chargé. Les moyens de commande peuvent alors piloter le transistor T1 à la fermeture en coupant son alimentation et piloter T2 à l'ouverture si la fonctionnalité "charge rapide du condensateur de bus" a été utilisée.

### - Surtension réseau

Lorsqu'une surtension se produit sur le réseau électrique d'alimentation A, il se produit un fort appel de courant dans le condensateur de bus Cb. Le courant circulant à travers le transistor T1 augmente donc rapidement jusqu'à ce que le transistor T1 passe en limitation. La résistance du transistor T1 augmente alors pour limiter le courant ce qui entraîne une augmentation de la tension V mesurée aux bornes du transistor T1. Si la tension V aux bornes du transistor T1 dépasse une seconde valeur seuil S2 mémorisée, par exemple fixée à 3 Volts, alors les moyens de commande appliquent une tension de commande sur le transistor T1 pour le piloter à l'ouverture. Dans cette situation, le courant circule alors via la première résistance R1 qui subit alors les effets de la surtension. Lorsque la surtension est terminée, la tension mesurée aux bornes du transistor T1 repasse sous la seconde valeur seuil S2 et les moyens de commande commandent alors le transistor T1 à la fermeture en coupant son alimentation. Il est possible de réduire le courant maximal de limitation en abaissant la seconde valeur seuil S2. Le transistor T1 est alors commandé à l'ouverture avant qu'il passe en limitation, la tension à ses bornes étant proportionnelle au produit de sa résistance à l'état passant et du courant le traversant.

### - Sous-tension réseau

Durant une sous-tension sur le réseau d'alimentation du variateur, le transistor T1 est fermé et le condensateur de bus Cb se décharge si une charge électrique 2 est présente sur l'onduleur ou ne se décharge pas si aucune charge électrique 2 n'est présente sur l'onduleur. Après la fin de la sous-tension, lors du retour à une tension normale, si le condensateur de bus Cb n'a pas été déchargé, aucun appel de courant ne se produit. En revanche, si pendant la sous-tension, le condensateur de bus Cb s'est déchargé pour alimenter la charge électrique 2, le condensateur de bus Cb doit être rechargé lors du retour à une tension normale, ce qui produit un fort appel de courant. Pour protéger les composants du variateur, le transistor T1 passe en limitation ce qui entraîne l'augmentation de la tension V mesurée aux bornes du transistor T1. Lorsque la tension V aux bornes du transistor T1 dépasse la seconde valeur seuil S2 définie ci-dessus, par exemple de 3 Volts, les moyens de commande commandent le transistor T1 à l'ouverture. Le courant passe alors par la première résistance R1. S'il existe une charge électrique 2 sur l'onduleur, tout le courant nécessaire à l'alimentation de la charge 2 et au rechargement du condensateur de bus Cb passe alors par la première résistance R1 ce qui entraîne un échauffement progressif de la première résistance R1. Si la tension V mesurée aux bornes du transistor T1 reste supérieure à la seconde valeur seuil S2 au moins pendant une durée t prédéterminée mémorisée, par exemple de 2-3 millisecondes, les moyens de commande 140 commandent la fermeture du transistor T2 afin d'accélérer la charge du condensateur de bus Cb en faisant passer du courant via la seconde résistance R2. En effet si la tension V aux bornes du transistor T1 reste supérieure à la seconde valeur seuil S2 pendant un certain temps, cela signifie que le variateur ne subit pas une surtension temporaire classique mais un retour à la normale après une sous-tension. Lorsque la tension V mesurée aux bornes du transistor T1 repasse sous la seconde valeur seuil S2, les moyens de commande 140 commandent le transistor T1 à la fermeture.

La description ci-dessus des différentes séquences de commande est effectuée en partant d'un dispositif de protection doté d'un transistor T1 normalement fermé. Cependant, elle doit être comprise de manière identique avec l'emploi d'un transistor T1 de type normalement ouvert. Cependant, dans ce cas, une alimentation isolée spécifique est nécessaire dans les moyens de commande pour commander le transistor T1 normalement ouvert.

Selon l'invention, ce dispositif convient bien lorsque le variateur 1 ne comporte pas d'inductance de filtrage (DC choke) sur le bus de puissance et lorsque le condensateur de bus présente une capacité de forte valeur (par exemple supérieur à 80µF par kW).

Cette solution seule a cependant l'inconvénient de créer une forte variation d'intensité (fort di/dt) au niveau du module redresseur 12 lorsque le transistor T1 est commandé à l'ouverture lors d'une surtension. Les inductances d'entrée ou inductance de ligne (non représentées sur la figure 1) du variateur 1 subissent alors une forte surtension transitoire ce qui peut entraîner la casse du pont de diodes du module redresseur 12.

Afin de dissiper l'énergie ainsi produite, il est possible d'utiliser la caractéristique d'avalanche du transistor T1. Le transistor T1 devient alors passant automatiquement si la tension V à ses bornes dépasse son seuil d'avalanche. Si la tension aux bornes du condensateur de bus atteint 700 Volts et que les diodes du module redresseur sont prévues pour supporter une tension de 1600 volts, le transistor T1 doit par exemple être dimensionné avec un seuil d'avalanche fixé à 800 Volts. Cependant le transistor T1 doit également être dimensionné pour pouvoir absorber une forte énergie provenant du réseau A.

En variante, pour dissiper l'énergie produite, on peut de préférence ajouter en parallèle du condensateur de découplage Cd, une varistance de type GMov M1 (montrée en traits pointillés) ou un transistor JFET T3 normalement ouvert doté en parallèle d'une diode Zener Z1. Le transistor T3 sera par exemple commandé à la fermeture en utilisant sa caractéristique d'avalanche ou à l'aide d'une commande spécifique.

## Revendications

1. Variateur de vitesse comportant :
- en entrée, un module redresseur (12) pour générer sur un bus de puissance (10, 11) une tension continue à partir d'une tension alternative disponible sur un réseau électrique d'alimentation (A),
- un condensateur de bus (Cb) connecté entre une ligne positive et une ligne négative du bus de puissance, et
- un module onduleur (13) alimenté par le bus de puissance et commandé pour délivrer une tension alternative à une charge électrique (2),
- le variateur (1) comprend un dispositif de protection (14) du variateur contre les surintensités liées à des variations de tension sur le réseau électrique d'alimentation (A),
**caractérisé en ce que :** le dispositif deprotéction (14) comporte:
- un premier interrupteur électronique placé (T1) sur le bus de puissance en série entre le module redresseur (12) et le condensateur de bus (Cb),
- une première résistance (R1) montée en parallèle du premier interrupteur électronique,
- un ensemble comprenant un second interrupteur électronique (T2) et une seconde résistance (R2) montés en série, ledit ensemble étant monté en parallèle du premier interrupteur électronique et de la première résistance (R1),
- des moyens de commande (140) du premier interrupteur électronique (T1) et du second interrupteur électronique (T2).

2. Variateur selon la revendication 1, **caractérisé en ce que** le dispositif de protection (14) est monté sur la ligne positive (10) du bus de puissance.

3. Variateur selon la revendication 1 ou 2, **caractérisé en ce que** le premier interrupteur électronique est un transistor (T1) de type JFET.

4. Variateur selon la revendication 3, **caractérisé en ce que** le transistor JFET (T1) est réalisé en carbure de silicium.

5. Variateur selon la revendication 3 ou 4, **caractérisé en ce que** le transistor JFET (T1) est normalement fermé.

6. Variateur selon l'une des revendications 3 à 5, **caractérisé en ce que** les moyens de commande (140) du transistor JFET (T1) sont connectés entre la ligne positive (10) et la ligne négative (11) du bus de puissance.

7. Variateur selon la revendication 6, **caractérisé en ce que** les moyens de commande (140) comprennent un circuit pompe de charge apte à appliquer une tension de commande au transistor JFET.

8. Variateur selon l'une des revendications 3 à 7, **caractérisé en ce que** le second interrupteur électronique est de type normalement ouvert.

9. Variateur selon la revendication 8, **caractérisé en ce que** les moyens de commande du second interrupteur électronique comprennent un circuit pompe de charge apte à appliquer une tension de commande au second interrupteur électronique (T2).

10. Variateur selon l'une des revendications 3 à 9, **caractérisé en ce que** les moyens de commande (140) comportent des moyens de mémorisation mémorisant une valeur seuil (S2) pour la tension (V) mesurée aux bornes du transistor JFET (T1) au-dessus de laquelle le transistor JFET (T1) est commandé à l'ouverture par les moyens de commande (140).

11. Variateur selon la revendication 10, **caractérisé en ce que** les moyens de mémorisation mémorisent une durée prédéterminée au bout de laquelle si la tension (V) mesurée aux bornes du transistor JFET (T1) reste supérieure à la valeur seuil (S2), le second interrupteur électronique (T2) est commandé à la fermeture.

12. Variateur selon l'une des revendications 3 à 11, **caractérisé en ce que** les moyens de commande (140) comportent des moyens de mémorisation mémorisant une valeur seuil (S1) pour la tension mesurée entre la ligne positive (10) et la ligne négative (11) du bus de puissance au-dessus de laquelle le second interrupteur électronique (T2) est commandé à la fermeture.

13. Variateur selon l'une des revendications 1 à 12, **caractérisé en ce qu'**il comporte en outre un dispositif pour protéger le module redresseur (12) contre les surtensions.

14. Variateur selon la revendication 13, **caractérisé en ce que** le dispositif pour protéger le module redresseur (12) contre les surtensions comporte un transistor de limitation (T3) de type JFET normalement fermé et une diode Zener (Z1) connectés tous deux en parallèle entre la ligne positive (10) et la ligne négative (11) du bus de puissance.

15. Variateur selon la revendication 13, **caractérisé en ce que** le dispositif pour protéger le module redresseur contre les surtensions comporte une varistance (M1) de type GMOV connectée entre la ligne positive (10) et la ligne négative (11) du bus de puissance.

## Claims

1. Variable speed drive comprising:
- as input, a rectifier module (12) for generating a direct voltage on a power bus (10, 11) from an alternating voltage available on an electrical power-supply network (A);
- a bus capacitor (Cb) connected between a positive line and a negative line of the power bus; and
- an inverter module (13) powered by the power bus and controlled to deliver an alternating voltage to an electrical load (2);
- a protection device (14) for protecting the variable speed drive against overcurrents linked with voltage variations on the electrical power-supply network (A);
**characterized in that** the protection device (14) comprises:
- a first electronic switch (T1) located on the power bus in series between the rectifier module (12) and the bus capacitor (Cb);
- a first resistor (R1) mounted in parallel with the first electronic switch;
- an assembly comprising a second electronic switch (T2) and a second resistor (R2) mounted in series, said assembly being mounted in parallel with the first electronic switch and the first resistor (R1);
- control means (140) for controlling the first electronic switch (T1) and the second electronic switch (T2).

2. Variable speed drive according to Claim 1, **characterized in that** the protection device (14) is mounted on the positive line (10) of the power bus.

3. Variable speed drive according to Claim 1 or 2, **characterized in that** the first electronic switch is a JFET transistor (T1).

4. Variable speed drive according to Claim 3, **characterized in that** the JFET transistor (T1) is made of silicon carbide.

5. Variable speed drive according to Claim 3 or 4, **characterized in that** the JFET transistor (T1) is normally on.

6. Variable speed drive according to one of Claims 3 to 5, **characterized in that** the control means (140) for controlling the JFET transistor (T1) are connected between the positive line (10) and the negative line (11) of the power bus.

7. Variable speed drive according to Claim 6, **characterized in that** these control means (140) comprise a charge pump circuit capable of applying a control voltage to the JFET transistor.

8. Variable speed drive according to one of Claims 3 to 7, **characterized in that** the second electronic switch is of the normally-off type.

9. Variable speed drive according to Claim 8, **characterized in that** the control means for controlling the second electronic switch comprise a charge pump circuit capable of applying a control voltage to the second electronic switch (T2).

10. Variable speed drive according to one of Claims 3 to 9, **characterized in that** the control means (140) comprise memory means storing a threshold value (S2) for the voltage (V) measured at the terminals of the JFET transistor (T1) above which the JFET transistor (T1) is switched off by the control means (140).

11. Variable speed drive according to Claim 10, **characterized in that** the memory means store a predetermined duration at the end of which, if the voltage (V) measured at the JFET transistor terminals (T1) remains greater than the threshold value (S2), the second electronic switch (T2) is switched on.

12. Variable speed drive according to one of Claims 3 to 11, **characterized in that** the control means (140) comprise memory means storing a threshold value (S1) for the voltage measured between the positive line (10) and the negative line (11) of the power bus above which the second electronic switch (T2) is switched on.

13. Variable speed drive according to one of Claims 1 to 12, **characterized in that** it additionally comprises a device for protecting the rectifier module (12) against overvoltages.

14. Variable speed drive according to Claim 13, **characterized in that** the device for protecting the rectifier module (12) against overvoltages comprises a normally-on JFET limiting transistor (T3) and a Zener diode (Z1), both connected in parallel between the positive line (10) and the negative line (11) of the power bus.

15. Variable speed drive according to Claim 13, **characterized in that** the device for protecting the rectifier module against overvoltages comprises a GMOV varistor (M1) connected between the positive line (10) and the negative line (11) of the power bus.

## Patentansprüche

1. Umrichter, der Folgendes umfasst :
- am Eingang ein Gleichrichtermodul (12), um auf einem Leistungsbus (10, 11) anhand einer Wechselspannung, die in einem Stromversorgungsnetz (A) zur Verfügung steht, eine Gleichspannung zu erzeugen,
- einem Buskondensator (Cb), der zwischen eine positive Leitung und eine negative Leitung des Leistungsbusses geschaltet ist, und
- ein Wechselrichtermodul (13), das durch den Leistungsbus versorgt wird und gesteuert wird, um an eine elektrische Last (2) eine Wechselspannung zu liefern,
- wobei der Umrichter (1) eine Schutzvorrichtung (14) des Umrichters gegen Überströme, die mit Schwankungen der Spannung in dem Stromversorgungsnetz (A) einhergehen, umfasst,
**dadurch gekennzeichnet, dass** die Schutzvorrichtung (14) Folgendes umfasst :
- einen ersten elektronischen Unterbrecher (T1), der in dem Leistungsbus zwischen dem Gleichrichtermodul (12) und dem Buskondensator (Cb) in Reihe geschaltet ist,
- einen ersten Widerstand (R1), der zu dem ersten elektronischen Unterbrecher parallel geschaltet ist,
- eine Anordnung, die einen zweiten elektronischen Unterbrecher (T2) und einen zweiten Widerstand (R2), die in Reihe geschaltet sind, umfasst, wobei die Anordnung zu dem ersten elektronischen Unterbrecher und dem ersten Widerstand (R1) parallel geschaltet ist,
- Steuermittel (140) für den ersten elektronischen Unterbrecher (T1) und den zweiten elektronischen Unterbrecher (T2).

2. Umrichter nach Anspruch 1, **dadurch gekennzeichnet, dass** die Schutzvorrichtung (14) in der positiven Leitung (10) des Leistungsbusses angebracht ist.

3. Umrichter nach Anspruch 1 oder 2, **dadurch gekennzeichnet, dass** der erste elektronische Unterbrecher ein Transistor (T1) des JFET-Typs ist.

4. Umrichter nach Anspruch 3, **dadurch gekennzeichnet, dass** der JFET-Transistor (T1) aus Siliciumcarbid verwirklicht ist.

5. Umrichter nach Anspruch 3 oder 4, **dadurch gekennzeichnet, dass** der JFET-Transistor (T1) normalerweise geschlossen ist.

6. Umrichter nach einem der Ansprüche 3 bis 5, **dadurch gekennzeichnet, dass** die Steuermittel (140) des JFET-Transistors (T1) zwischen die positive Leitung (10) und die negative Leitung (11) des Leistungsbusses geschaltet sind.

7. Umrichter nach Anspruch 6, **dadurch gekennzeichnet, dass** die Steuermittel (140) eine Ladungspumpenschaltung umfassen, die an den JFET-Transistor eine Steuerspannung anlegen kann.

8. Umrichter nach einem der Ansprüche 3 bis 7, **dadurch gekennzeichnet, dass** der zweite elektronische Unterbrecher vom normalerweise geöffneten Typ ist.

9. Umrichter nach Anspruch 8, **dadurch gekennzeichnet, dass** die Steuermittel des zweiten elektronischen Unterbrechers eine Ladungspumpenschaltung umfassen, die an den zweiten elektronischen Unterbrecher (T2) eine Steuerspannung anlegen kann.

10. Umrichter nach einem der Ansprüche 3 bis 9, **dadurch gekennzeichnet, dass** die Steuermittel (140) Speichermittel umfassen, die einen Schwellenwert (S2) für die an den Anschlüssen des JFET-Transistors (T1) gemessene Spannung (V) speichern, oberhalb dessen der JFET-Transistor (T1) durch die Steuermittel (140) in den durchgeschalteten Zustand gesteuert wird.

11. Umrichter nach Anspruch 10, **dadurch gekennzeichnet, dass** die Speichermittel eine vorgegebene Dauer speichern, an deren Ende dann, wenn die an den Anschlüssen des JFET-Transistors (T1) gemessene Spannung (V) oberhalb des Schwellenwerts (S2) bleibt, der zweite elektronische Unterbrecher (T2) in den gesperrten Zustand gesteuert wird.

12. Umrichter nach einem der Ansprüche 3 bis 11, **dadurch gekennzeichnet, dass** die Steuermittel (140) Speichermittel umfassen, die einen Schwellenwert (S1) für die zwischen der positiven Leitung (10) und der negativen Leitung (11) des Leistungsbusses gemessene Spannung speichern, oberhalb dessen der zweite elektronische Unterbrecher (T2) in den gesperrten Zustand gesteuert wird.

13. Umrichter nach einem der Ansprüche 1 bis 12, **dadurch gekennzeichnet, dass** er außerdem eine Vorrichtung zum Schützen des Gleichrichtermoduls (12) vor Überspannungen umfasst.

14. Umrichter nach Anspruch 13, **dadurch gekennzeichnet, dass** die Vorrichtung zum Schützen des Gleichrichtermoduls (12) vor Überspannungen einen normalerweise geschlossenen Begrenzungstransistor (T3) des JFET-Typs und eine Zener-Diode (Z1), die zwischen der positiven Leitung (10) und der negativen Leitung (11) des Leistungsbusses zueinander parallel geschaltet sind, umfasst.

15. Umrichter nach Anspruch 13, **dadurch gekennzeichnet, dass** die Vorrichtung zum Schützen des Gleichrichtermoduls vor Überspannungen einen Varistor (M1) des GMOV-Typs, der zwischen die positive Leitung (10) und die negative Leitung (11) des Leistungsbusses geschaltet ist, umfasst.
